# EUROPEAN PATENT APPLICATION

(11) **EP 1 632 427 A1**
(43) Date of publication of application: **08.03.2006**
(21) Application number: 04020919.9
(22) Date of filing: 02.09.2004
(51) Int. Cl.: B62J 6/12

(54) **Swirled iron-core type hub generator**

(71) Applicant: Lee Chi Enterprises Company Ltd., Chang Hwa City (TW)
(72) Inventor: Chiang, Chang-Chen, Chang Hwa City (TW); Chou, Bo-Yi, Chang Hwa City (TW)
(74) Representative: Wehnert, Werner

(57) **Abstract**

A swirled iron-core type hub generator comprising a stator fixed on a hub axis by using a coil (80) and two stator yokes (50), a plurality of permanent magnets having opposite pole direction provided on an internal peripheral surface of the hub of a bicycle, wherein the hub is driven to rotate by the wheel of a bicycle; a swirled core (30) whose axis is parallel to the hub axis, and the swirled core (30) is disposed between the hub axis and the coil (80). With the swirled core (30), the magnet reluctance of the swirled iron-core hub generator can be reduced i.e. effectively suppress the eddy current, thus, the generation efficiency of the present invention is improved.

## Description

### BACKGROUND OF THE INVENTION

### Field of the Invention

The present invention relates to a hub generator, and more particularly to a swirled iron-core type hub generator which is used on the bicycle and eddy current can be suppressed, thus, the generation efficiency of the present invention is improved.

### Description of the Prior Arts

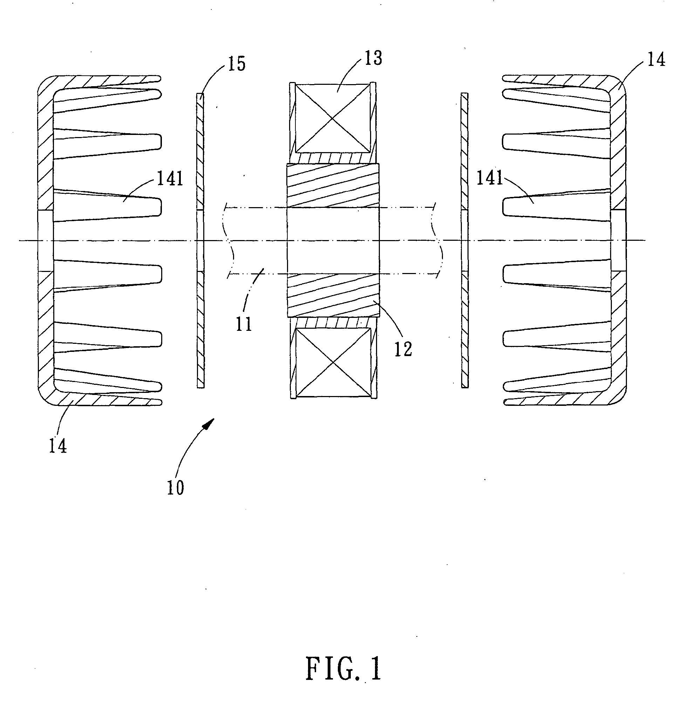

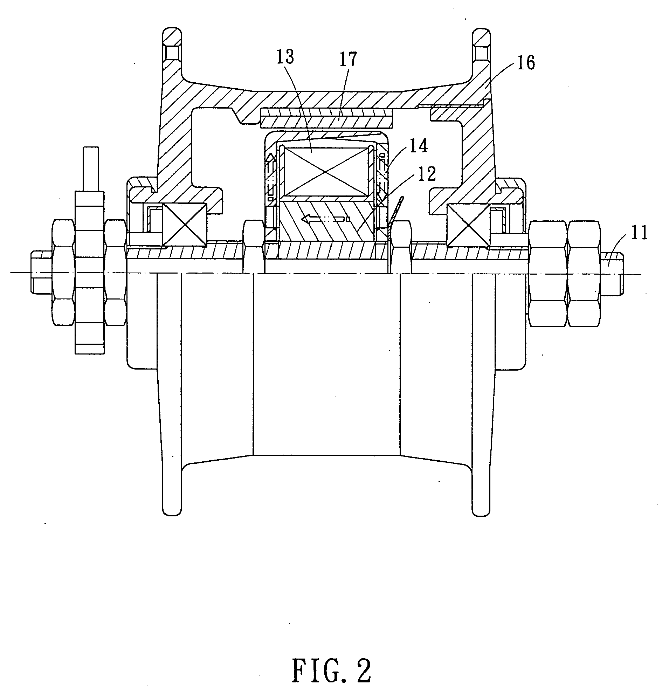

Most of the bicycle generators sold on the current market use the bicycle hub to generate electrical power. As shown in Fig. 1, a conventional bicycle generator generally includes a pair of stator yokes 14 disposed in the front hub or the rear hub of a bicycle. In the stator yokes 14 are provided a hub axis 11 and an iron core 12 about which a coil 13 is wound. The hub axis 11, the iron core 12, the coil 13, two conductive plates 15 and the pair of stator yokes 14 compose a stator 10. The stator 10 is fixed in the hub 16 via the hub axis 11. The stator 10, the hub 16 and a plurality of permanent magnets 17 located opposed to the stator 10 compose a hub generator. The permanent magnets 17 are disposed on the inner peripheral wall of the hub 16 in an alternative manner that the permanent magnets 17 lying after each other have opposite pole direction (as shown in Fig.2). Each of the pair of stator yokes 14 of the stator 10 is provided with a plurality of legs 141 which are separated from each other and arranged correspondingly to the permanent magnets 17. When one of the legs on one of the two stator yokes 14 faces the N pole of a permanent magnet 17, a corresponding leg on the other one of the two stator yokes 14 will face the S pole of the permanent magnet 17, thus creating a magnetic circuit as: S pole-to-one of the two stator yokes 14-to-iron core 12-to-the other one of the two stator yokes 14-to-N pole, so that the coil 13 will produce an AC current and transmit the produced AC current to the light (or the battery) on the bicycle.

The working principle of the conventional bicycle's hub generator is explained as follows:
When the wheel rotates, the permanent magnets 17 in the hub 16 will rotate along with the wheel, the magnetic flux produced by the permanent magnets 17 are in such a state that an end of the respective magnetic flux facing the stator yokes 14 is N pole and the other end is S pole, and in this way, the magnetic flux is produced alternatively. The electrons of the coil 13 are affected by the magnetic flux to flow, thus producing electric current. And the magnetic flux is produced round the stator yokes 14 in the direction as indicated by the arrow in Fig. 2.
Since the center of the respective stator yokes 14 is connected to the iron core 12, the connecting portion between the stator yokes 14 and the iron core 12 will produce a great magnetic reluctance due to the large amount of magnetic flux and subsequently produce eddy current.
The eddy current produced by the rotation of the hub 16 must be in the shape of a closed curve, and the greatest eddy current will be produced at the connecting portion between the stator yokes 14 and the iron core 12 (where there are the greatest number of magnetic flux produced alternatively). The axis of the closed curve of the eddy current is parallel to the hub axis 11, and the eddy current will decrease the generation efficiency of the coil 13.
The present invention has arisen to mitigate and/or obviate the afore-described disadvantages.

### SUMMARY OF THE INVENTION

The primary object of the present invention is to provide a swirled iron-core type hub generator which can suppress the generation of eddy current, wherein an inner and an outer cylinders, a swirled core, a coil and two stator yokes are installed on the hub axis sequentially, the swirled core is disposed between the coil and the hub axis, an axis of the swirled core is parallel to the hub axis. With the swirled core, eddy current can be suppressed, thus, the generation efficiency of the present invention is improved.

The present invention will become more obvious from the following description when taken in connection with the accompanying drawings, which show, for purpose of illustrations only, the preferred embodiment in accordance with the present invention.

### BRIEF DESCRIPTION OF THE DRAWINGS

Fig. 1 is an exploded view of a conventional hub generator;
Fig. 2 is a cross sectional view for illustrating the magnetic circuit of the conventional hub generator;
Fig. 3 is an exploded view of a stator core of a swirled iron-core type hub generator in accordance with the present invention;
Fig. 4 is an assembly view of a stator core of a swirled iron-core type hub generator in accordance with the present invention;
Fig. 5 is a partial exploded view of a swirled iron-core type hub generator in accordance with the present invention;
Fig. 6 is side cross sectional view of a swirled iron-core type hub generator in accordance with the present invention;
Fig. 7 is front half cross sectional view of a swirled iron-core type hub generator in accordance with the present invention.

### DETAILED DESCRIPTION OF THE PREFERRED EMBODIMENT

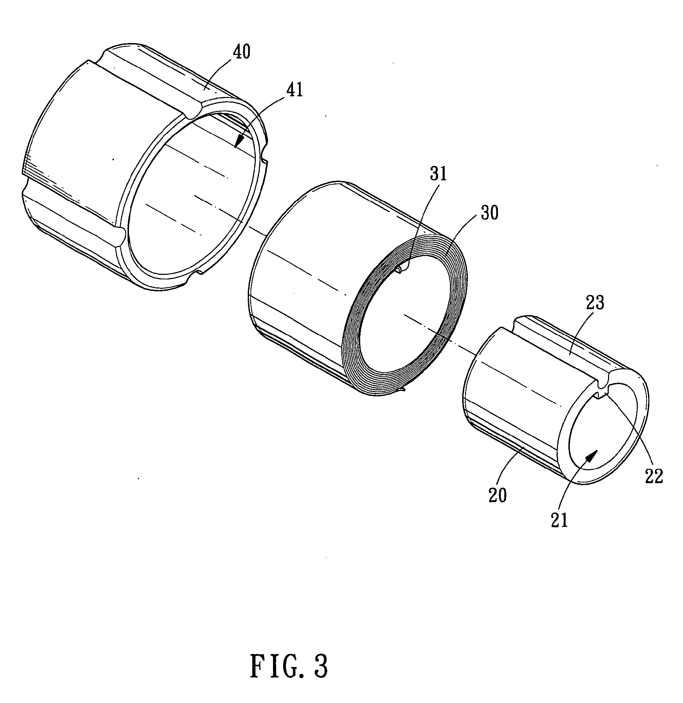

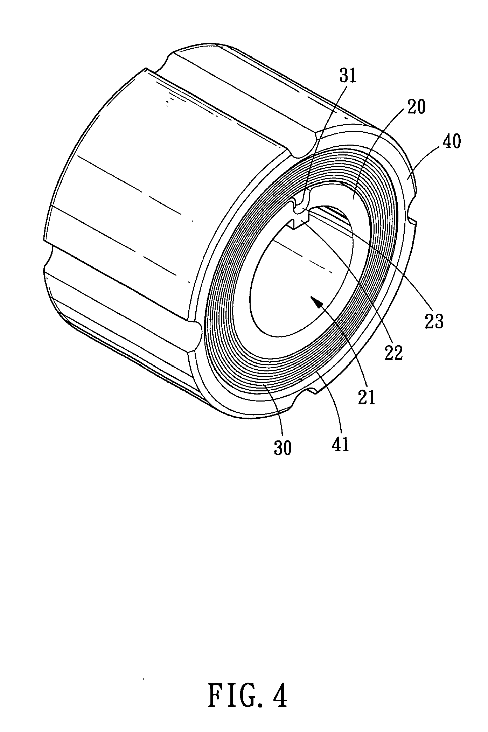

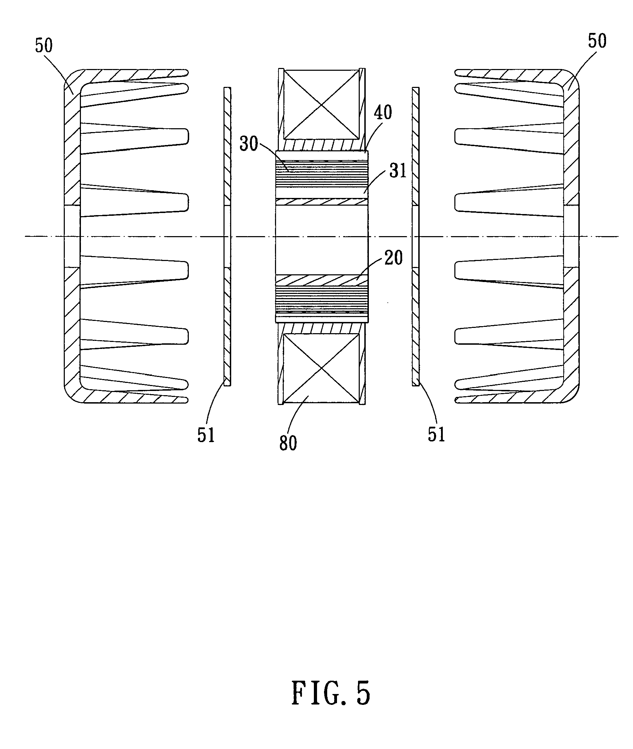

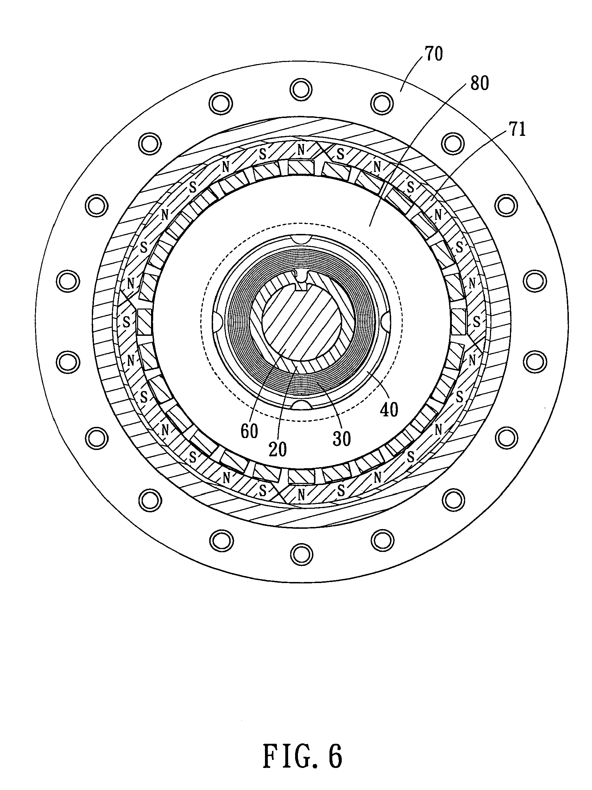

Referring to Figs. 3-6, a swirled iron-core type hub generator in accordance with the present invention is shown and generally includes: a stator comprising an inner cylinder 20, a swirled core 30, an outer cylinder 40, a coil 80 which are installed on a hub axis 60 sequentially by cooperating with two stator yokes 50 and two conductive plates 51. The two stator yokes 50 and the two conductive plates 51 are disposed at the outermost layer of the stator, and the stator is installed in a hub 70. On the inner peripheral wall of the hub 70 are alternatively disposed a plurality of permanent magnets 71 having opposite pole direction.

The inner cylinder 20 is mounted onto the hub axis 60 through its inner hole 21 and a projecting member 22 formed on the inner surface of the inner hole 21, on the outer surface of the inner cylinder 20 is formed a locating groove 23.

The swirled core 30 is made by coiling silicon steel sheet ( which is made of pure iron material ) into a swirled shape, and the axis of the swirled core 30 is parallel to the hub axis 60. A locating member 31 is provided at an internal terminal edge of the swirled core 30, the swirled core 30 is mounted onto the outer surface of inner cylinder 20 in such a manner that the locating member 31 is inserted in the locating groove 23.

The outer cylinder 40 is mounted onto the outer surface of the swirled core 30 through its engaging hole 41.

The coil 80 is installed onto the outer surface of the outer cylinder 40 and located between the two stator yokes 50, serving to transmit current to external circuit with conductive wires at two ends of the coil 80.

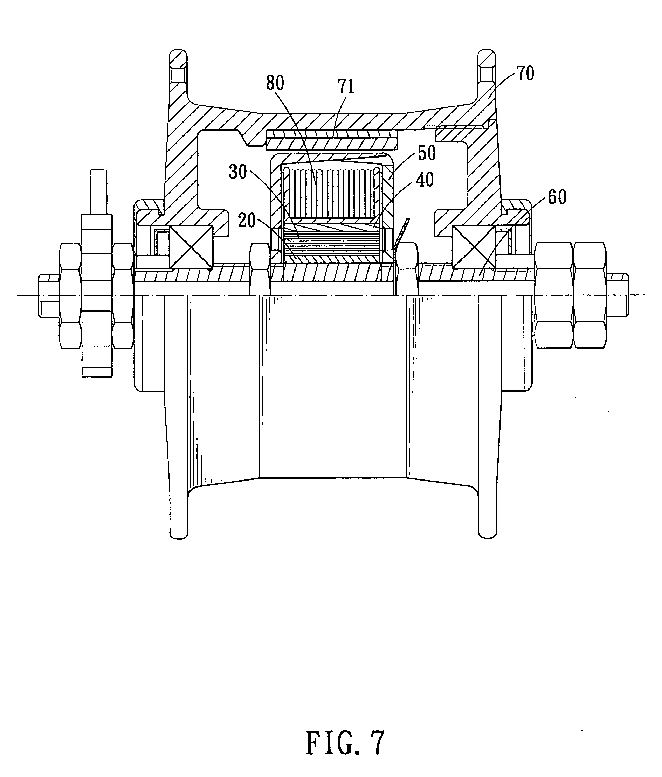

For explicit explanation of how the device of the present invention works, please refer to Fig. 7, nevertheless, the working principle of the present invention is the same as that of the conventional hub generator, so further explanation on this matter will be omitted.

When the wheel rotates the hub 70, the plurality of permanent magnets 71 having opposite pole direction will alternatively produce magnetic flux having opposite pole direction by cooperating with the two stator yokes 50, so that the coil 80 will be affected to produce AC current, and finally, the AC current will be transmitted to the light or the battery of the bicycle by the conductive wires at both ends of the coil 80.

The induced magnetic field of the coil 80 will affect other components of the stator, and the connecting portion between the stator yokes 50 and the swirled core 30 will produce the greatest eddy current (where there are the greatest number of magnetic lines produced), the axis of the closed curve of the eddy current is parallel to the hub axis 60. Nevertheless, since the stator in accordance with the present invention is provided with the iron-made swirled core 30, and the axis of the swirled core 30 is parallel to the hub axis 60, the closed eddy current will be spoiled by the unclosed and swirled core 30. Thereby, the magnetic reluctance of the swirled iron-core type hub generator in accordance with the present invention can be reduced (effectively suppress the eddy current), as a result, the generation efficiency of the present invention is improved.

It is to be noted that, the structural characteristic of the present invention is that the swirled core 30 is clamped and positioned between the inner and the outer cylinders 20, 40. Since the swirled core 30 is shaped to cooperate with the inner and the outer cylinders 20, 40, the assembly will be easy and the production cost will be reduced accordingly. In addition, the outer cylinder 40 also can be formed on the outer surface with a locating structure (the positioning member) so as to be positioned in the coil 80 more easily (not shown), and the cylinder 40 also can be provided on its inner surface with a positioning member to position the swirled core 30.

While we have shown and described various embodiments in accordance with the present invention, it should be clear to those skilled in the art that further embodiments may be made without departing from the scope of the present invention.

## Claims

1. A swirled iron-core type hub generator comprising a stator fixed on a hub axis by using a coil and two stator yokes, on an internal peripheral surface of the hub of a bicycle provided a plurality of permanent magnets having opposite pole direction, wherein the hub is driven to rotate by wheel of a bicycle and has the characteristic:
a swirled core whose axis is parallel to the hub axis, and the swirled core is disposed between the hub axis and the coil.

2. The swirled iron-core type hub generator as claimed in claim 1 further includes:
an inner cylinder is mounted onto the hub axis via an inner hole;
the swirled core is wound about the inner cylinder;
an outer cylinder is mounted onto the swirled core via an engaging hole;
the coil is installed on an outer peripheral surface of the outer cylinder.

3. The swirled iron-core type hub generator as claimed in claim 2, wherein a projecting member is formed on an internal surface of the inner cylinder for enabling the inner cylinder to be positioned on the hub axis.

4. The swirled iron-core type hub generator as claimed in claim 2, wherein the outer cylinder is positioned in the coil by using a positioning member.

5. The swirled iron-core type hub generator as claimed in claim 2, wherein a locating groove is formed on the outer surface of the inner cylinder, and a locating member is provided on an internal terminal edge of the swirled core and employed to insert in the locating groove of the inner cylinder.

6. The swirled iron-core type hub generator as claimed in claim 2, wherein the outer cylinder serves to position the swirled core by using the engaging hole and a positioning member.

7. The swirled iron-core type hub generator as claimed in claim 1, wherein the swirled core is made by coiling a pure-iron-made silicon steel sheet into a swirled shape.
